# EUROPEAN PATENT SPECIFICATION

(11) **EP 3 573 808 B1**
(45) Date of publication and mention of the grant of the patent: **24.02.2021**
(21) Application number: 18704377.3
(22) Date of filing: 25.01.2018
(51) Int. Cl.: B29C 45/37, B29C 33/30, B29C 33/38, B29C 33/40

(54) **ADAPTIVE MOLD**
ADAPTIVE FORM
MOULE ADAPTABLE

(30) Priority: 25.01.2017 US 201762450410 P
(43) Date of publication of application: 04.12.2019
(73) Proprietor: Nike Innovate C.V., Beaverton, Oregon 97005 (US)
(72) Inventor: ISSE, Jose, Beaverton Oregon 97005 (US)
(74) Representative: Müller-Boré & Partner Patentanwälte PartG mbB
(86) International application number: PCT/US2018/015267
(87) International publication number: WO 2018/140616

(56) References cited:
- EP-B1- 1 373 340
- US-B1- 6 986 855
- US-B2- 8 038 923

## Description

Manufacturing tooling for producing a variety of articles.

Tooling, such as a mold, is traditionally specific to a particular article. Therefore different molds are maintained in a manufacturing environment for each of the articles to be molded.

EP 1 373 340 A1 describes a shape memory polymer or alloy ophthalmic lens mold and methods of forming ophthalmic products.

Aspects herein provide an adaptive mold with a thermoform polymer molding surface. The mold includes a base having one or more sidewalls and a floor. The one or more sidewalls extend from the floor and at least in part form a cavity. The mold also includes a molding surface of a thermoform polymer material extending between the one or more sidewalls as a sheet-like element or as a bladder-like element. The thermoform material has a molding surface presented away from the floor and an opposite cavity-facing surface presented toward the floor. The molding surface forms around a positive part into the cavity volume when the molding surface is at at least a transition temperature of the thermoform polymer material to form a molding cavity in which an article may be molded. The base is further comprised of a pressure port extending through the frame into the cavity. The thermoform material may subsequently be formed to include a different mold cavity in which a different article may be molded with the same thermoform material.

Aspects also contemplate a method of molding an article with a thermoform polymer molding surface. The method includes raising a temperature of the thermoform polymer molding surface to at least a transition temperature. In an exemplary aspect, the transition temperature is a temperature that is 15 degrees Celsius ("C") below a glass transition temperature of the thermoform polymer molding surface. The transition temperature may be other temperatures, such as a glass transition temperature or a melt temperature of at least a portion of the thermoform polymer. The methods also includes forming the thermoform polymer molding surface into a first mold cavity with a positive shaped tool and then reducing the temperature of the thermoform polymer molding surface below the transition temperature. The method further includes backfilling the thermoform polymer molding surface with a substantially non-compressible material at a cavity side of the thermoform polymer molding surface that is opposite a molding side of the thermoform polymer molding surface. The method continues with removing the positive shaped tool from the first mold depression. The method also includes applying a molding material into the first mold depression and then extracting the molding material from the first mold depression as a molded article. The method further includes forming the thermoform polymer molding surface into a second mold depression that is different from the first mold depression/cavity for molding a different molded article.

This summary is provided to enlighten and not limit the scope of methods and systems provided hereafter in complete detail.

The present invention is described in detail herein with reference to the attached drawing figures, wherein:
FIG. 1 depicts an adaptive mold, in accordance with aspects hereof;
FIG. 2 depicts a cross-sectional view along cutline 2-2 of FIG. 1, in accordance with aspects hereof;
FIG. 3 depicts the adaptive mold of FIG. 1 having a mold cavity formed therein, in accordance with aspects hereof;
FIG. 4 depicts an illustrated process flow with an adaptive mold, in accordance with aspects hereof;
FIG. 5 depicts a cross-sectional view along cutline 5-5 of the adaptive mold from FIG. 3, in accordance with aspects hereof;
FIG. 6 depicts an alternative cross-sectional view of the adaptive mold from FIG. 3, in accordance with aspects hereof;
FIG. 7 depicts an exemplary system for use with an adaptive mold, in accordance with aspects hereof;
FIG. 8 depicts an alternative cross-sectional view of an adaptive mold having a bladder, in accordance with aspects hereof; and
FIG. 9 depicts a cross-sectional view of an adaptive mold and a positive tooling, in accordance with aspects hereof.

Tooling, such as component-specific molds, in a manufacturing environment can be expensive to manufacture and store. For example, each specific mold that is not in use may be stored for future use. The storage of a specific mold takes space and a method of finding the specific mold for future use. Therefore, having a specific mold for each unique component and/or size of component can add costs and burdens to a manufacturing environment.

Aspects herein contemplate an adaptable mold for use with multiple components and/or sizes of a component. This adaptability is accomplished, in an exemplary aspect, through use of universal elements and re-formable elements. For example, aspects herein contemplate a mold with a thermoform polymer molding surface. The mold comprises a base having one or more sidewalls and a floor. The one or more sidewalls extend from the floor and at least in part form a cavity. The base is further comprised of a pressure port extending through the frame into the cavity. The mold is also comprised of a molding surface of a thermoform polymer material that extends between the one or more sidewalls and encloses the cavity formed by the sidewalls and the floor. The molding surface has a mold side presented away from the floor and an opposite cavity-side surface presented toward the floor. The thermoform material at the molding surface forms around a positive part into the cavity when the molding surface is at at least a transition temperature of the thermoform polymer material. The positive part is, at least in part, a representation of a part to be molded by the mold. The positive part forms the thermoform material into a mold cavity into which a molding material may be introduced to mold a part defined by the molding surface of the thermoform material. Subsequent to molding the part, the thermoform material may be reformed with a different positive part around which the thermoform material forms a different mold cavity. A different article may then be molded in the different mold cavity. As such, a common mold may be used to produce different molded articles, in an exemplary aspect.

Additional aspects contemplate a method of molding an article with a thermoform polymer molding surface. The method includes raising a temperature of the thermoform polymer molding surface to at least a transition temperature. In an exemplary aspect, the transition temperature is a temperature that is 15 degrees Celsius ("C") below a glass transition temperature of one or more segments forming the thermoform polymer molding surface. As will be discussed in greater detail, the 15 degrees C below a glass transition temperature is at least where the thermoform material may exhibit characteristics at which the thermoform material may be formed into a temporary shape for use in molding. The method also includes forming the thermoform polymer molding surface into a first mold depression (also referred to as a mold cavity herein) with a positive shaped tool and then reducing the temperature of the thermoform polymer molding surface below the transition temperature. The method further includes backfilling the thermoform polymer molding surface with a substantially non-compressible material at a cavity side of the thermoform polymer molding surface that is opposite a molding side of the thermoform polymer molding surface. The method also includes removing the positive shaped tool from the first mold depression. Following forming the thermoform material with the positive shaped tool to form a mold cavity, applying a molding material (e.g., a polymer-based material such as ethylene-vinyl acetate ("EVA") or rubber) into the first mold depression to form a molded part. The method continues with extracting the molding material from the first mold depression. The method also includes forming the thermoform polymer molding surface into a second mold depression that is different from the first mold depression. For example, it is contemplated that the thermoform material is exposed to the transition temperature (or above) again that allows the thermoform material to form into the second mold depression from either the first mold depression configuration or a learned shape to be discussed hereinafter with respect to shape memory polymers. As a result, a common tooling (i.e., the mold) may be used for different parts by altering the molding surface formed by the thermoform material to serve as a mold for different components based on the mold depression shape formed therein.

In an additional exemplary aspect contemplated herein, a method of forming a thermoform polymer molding surface as a mold for sequentially different articles is provided. The method includes raising the thermoform polymer molding surface to at least 145 degrees C. The thennoform polymer molding surface is comprised of a shape memory polymer ("SMP") having a programmed (e.g., also referred to as a learned or permanent) configuration. A SMP is able to return to the programmed shape/form from a temporary shape/form based on a trigger like thermal energy, as will be discussed in greater detail hereinafter. The temporary shape/form may be the various mold depressions formed in the thermoform material for use as molding surfaces to mold an object. The method also includes creating a first mold depression on a mold side of the thermoform polymer molding material. Subsequent to creating the first mold depression, such as through introduction of a positive tooling to the thermoform material, reducing a temperature of the thermoform polymer molding material below 145 degrees C. At this point, the thermoform material may be used as a mold for molding one or more articles having a shape defined by the first mold depression. In exemplary aspects, a fill material may provide support, such as compressive support, to the thermoform material during molding operations. Once the first mold depression has been used to form one or more molded articles, the method contemplates shaping the thermoform polymer molding surface based on the programmed configuration of the shape memory polymer. For example, the thermoform material may be programmed to return to a substantially planar configuration that essentially removes elements of the first mold depression from the thermoform polymer material. The programmed configuration may be achieved through raising the temperature of the thermoform polymer material above a transition temperature. The method may continue with creating a second mold depression on the mold side of the thermoform polymer molding surface. For example, a new positive tooling may be impressed into the thermoform material while the thermoform material is at or above a transition temperature. The thermoform material may therefore assume the shape of the new positive tooling to form the second mold depression. The method may then include reducing a temperature of the thermoform polymer molding surface below 145 degrees C. Reduction of the temperature may cause the thermoform material to achieve a characteristic that is suitable for use as a molding surface to mold an article having a shape defined, at least in part, by the second mold depression.

A thermoform material may be a thermoset polymer or a thermoplastic polymer. In an exemplary aspect, the thermoform material is a shape memory polymer ("SMP"). In alternative exemplary aspects, the thermoform material is a non-polymer, such as a metallic-based material.

SMPs can retain at least two shapes, and the transition between the shapes/forms is induced by a trigger, such as temperature. In addition to temperature change, the shape change of SMPs can also be triggered by an electric or magnetic field, light or chemical solution. SMPs can cover a wide property range from stable to biodegradable, from soft to hard, and from elastic to rigid, depending on the structural units that constitute the SMP. SMPs may include thermoplastic and thermoset (e.g., covalently cross-linked) polymeric materials.

Two quantities that can be used to describe shape-memory effects of SMP are strain recovery rate (Rᵣ) and strain fixity rate (R_{f}). The strain recovery rate describes the ability of the material to memorize its permanent shape, while the strain fixity rate describes the ability of switching segments to fix the mechanical deformation caused by the temporary shape.

Polymers exhibiting a shape-memory effect have both a visible, current (also referred to as a temporary) form and a stored (also referred to as a permanent or learned) form. Once the SMP material has been manufactured by conventional methods, the SMP material is changed into a temporary form by processing through heating, deformation, and finally, cooling. The SMP material maintains this temporary shape until the shape change into the permanent form is activated by a predetermined external stimulus, such as being exposed to a predetermined temperature (e.g., a transition temperature).

SMPs work through their molecular network structure, which contains at least two separate phases. The phase showing the highest thermal transition temperature, Tₚₑᵣₘ, is the temperature that must be exceeded to establish the physical crosslinks responsible for the permanent shape. The switching segments are the segments with the ability to soften past a certain transition temperature (Tₜᵣₐₙₛ) and are responsible for the temporary shape. Therefore, the Tₜᵣₐₙₛ is less than the Tₚₑᵣₘ. As such, the stored/learned/permanent shape is formed at Tₚₑᵣₘ and the temporary shape is formed at the lower Ttrans. In some cases the transition temperature is the glass transition temperature (T_{g}) and in others the melting temperature (Tₘ) of the SMP or segments forming the SMP. Exceeding Tₜᵣₐₙₛ (while remaining below Tₚₑᵣₘ) activates the switching between the temporary shape and the learned/stored shape by softening these switching segments and thereby allowing the material to resume its learned/stored shape. Below Tₜᵣₐₙₛ, flexibility of the segments is at least partly limited. If Tₘ is chosen for programming the SMP, strain-induced crystallization of the switching segment can be initiated when it is stretched above Tₘ and subsequently cooled below Tₘ. These crystallites form covalent netpoints which prevent the polymer from reforming its usual coiled structure. The hard to soft segment ratio is often between 5:95 respectively and 95:5 respectively. It is contemplated that any SMP composition may be used. Additionally, it is contemplated that a SMP having any transition temperature or temperatures may be used in exemplary aspects.

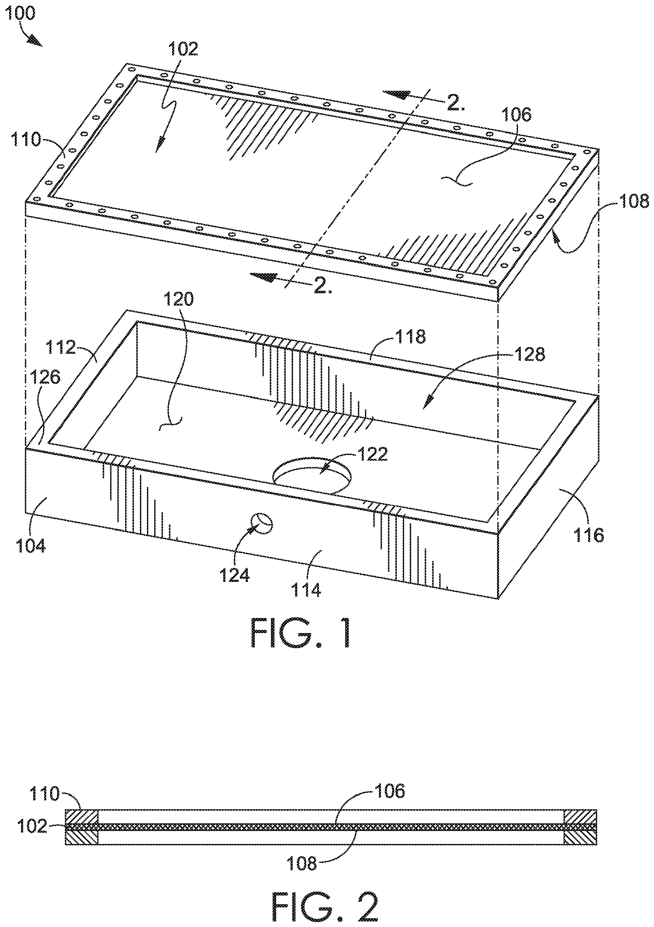

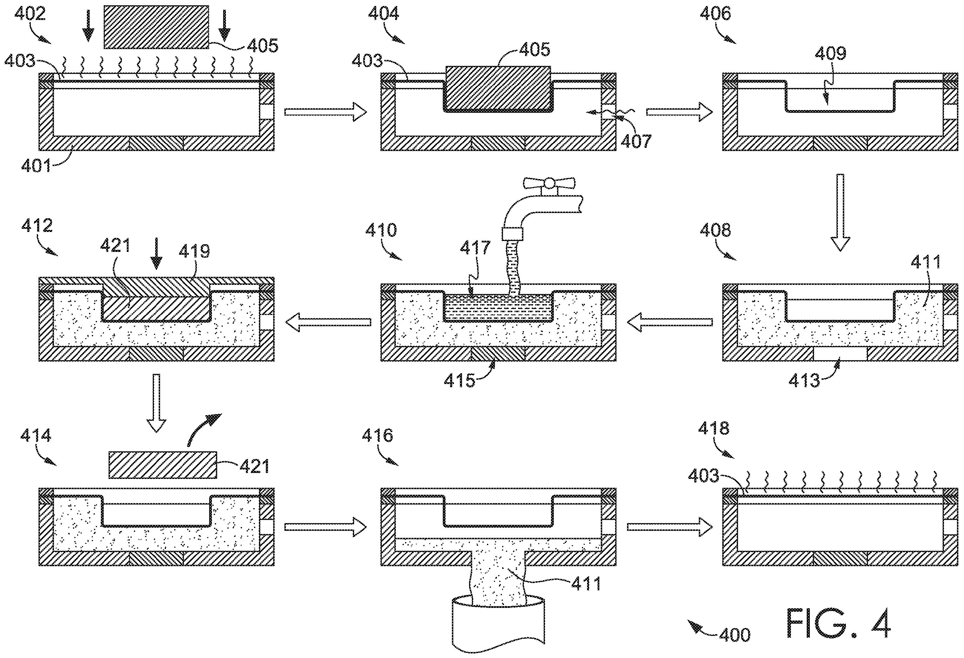

Turning to FIG. 1, depicting an exemplary mold 100, in accordance with aspects hereof. The mold 100 is comprised of a molding surface 106 formed from a thermoform material 102. Opposite the molding surface 106 is a cavity-side surface 108. The mold 100 is also comprised of a base 104. The base 104 is formed from one or more sidewalls, such as sidewalls 112, 114, 116, and 118 as depicted in FIG. 1. The sidewalls extend from a floor 120 of the base 104. The floor 120 and the one or more sidewalls 112, 114, 116, and 118 form, at least in part, a cavity 128. The cavity 128 may be further defined by the thermoform material 102, as best seen in FIGs. 4-6, for example.

The base 104 is further comprised of a pressure port 124. The pressure port 124 extends through the base 104, such as at a sidewall or the floor. While not depicted, it is contemplated that the positive pressure port may be omitted or the positive pressure port may instead pass through the thermoform material or a frame 110, in exemplary aspects. According to the present invention, the pressure port 1124 extends through the frame 110 into the cavity 128. As will be discussed in greater detail hereinafter, it is contemplated that the pressure port 124 is a port for adjusting a pressure experienced within the mold, such as at the cavity 128. For example, an air pressure greater than ambient pressure is provided into the cavity 128 by way of the pressure port 124. The increased relative pressure within the cavity 128 may be effective to form the thermoform material 102 about a positive tooling, as will be discussed in greater detail hereinafter.

The base 104 may be further comprised of a backfill port 122. The backfill port 122 extends through the base 104 to provide an aperture for introducing or removing backfill material. The backfill port 122 may extend through the floor 120 and/or one or more side walls, such as sidewalls 112, 114, 116, and 118. As will be provided in greater detail hereinafter, the backfill that is introduced or removed through the backfill port 122 may be used to provide structural support to the thermoform material 102 when used as a mold surface for molding an article.

The mold 100 is contemplated as a tooling that is adaptable to form a variety of molded articles by reshaping a mold cavity formed by the thermoform material 102 without having unique molds for each of the to-be-molded articles. For example, in the manufacturing of articles of footwear, such as a shoe, a different mold may be used for each style and size of the article of footwear to be manufactured. Therefore a manufacturing environment may have a plurality of unique molds each taking storage space and having an acquisition expense. Instead, the mold 100 may be used to mold a plurality of the different size and/or style articles by reforming the thermoform material to serve as a mold surface.

In the manufacture of articles of footwear, a mold may be used to form individual components of the article, such as the sole or portions of the sole, the upper or portions of the upper, and the like. For example, the sole may be comprised of a midsole formed from a cast ethylene-vinyl acetate (EVA) and/or an outsole formed from a cast rubber. Alterative materials and forming techniques (e.g., injection molding) known in the art may be used in connection with aspects hereof. In the example of the midsole, the mold 100 may be reformed to mold a midsole for a variety of sizes for the same style. Therefore a single mold 100 may serve a variety of shoe sizes that would have traditionally required multiple unique molds, for example.

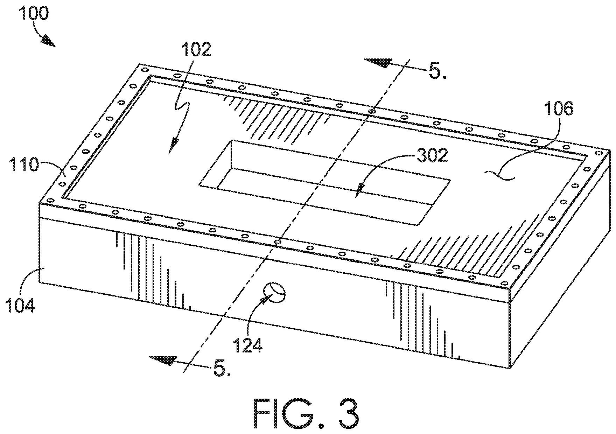

FIG. 2 depicts a cross-sectional view along cutline 2-2 from FIG. 1, in accordance with aspects hereof. The frame 110, in this illustrated aspect, captures a perimeter of the thermoform material 102. The frame 110 may be secured, as will be depicted in FIG. 3, with the base 104 at a perimeter 112 to maintain the thermoform material 102 and the base in a relative position for molding operations. The frame 110 may serve as a structural support to the thermoform material such that as the thermoform material is formed about a positive tooling, the thermoform material is still able to be coupled, either permanently or temporarily, with the base 104. The molding surface 106 forms a surface defining a mold to form a molded article. The cavity-side surface 108 is opposite the molding surface 106 and is presented towards the floor 120 of the base 104, as seen in FIG. 1. As depicted, the thermoform material 102 is in a substantially planar configuration, which in an exemplary aspect is a learned state when the thermoform material 102 is a SMP.

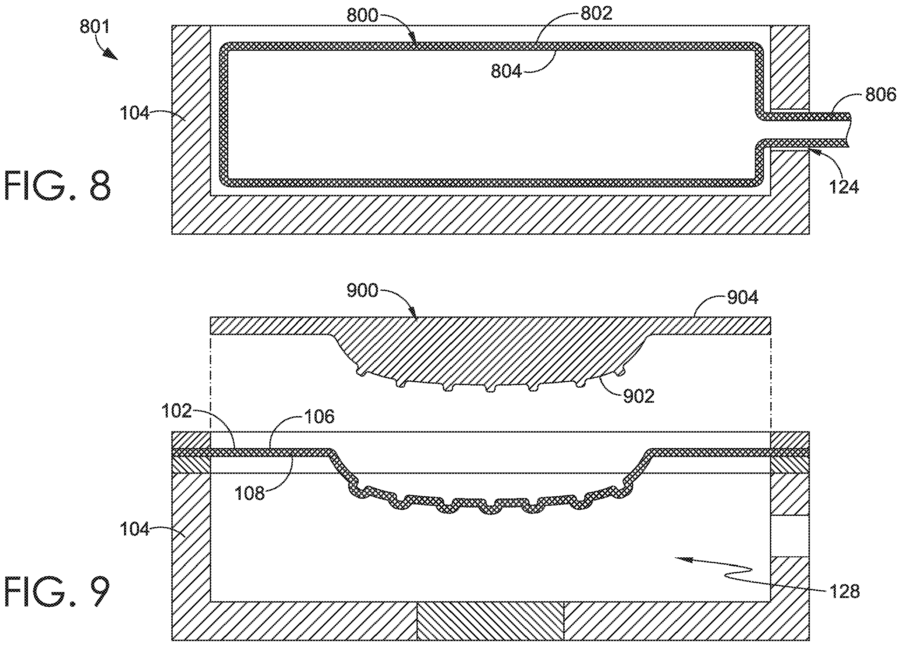

FIG. 3 depicts the mold 100 having a mold cavity 302 formed in the thermoform material 102, in accordance with aspects hereof. The mold cavity 302 is a depression within the thermoform material 102 extending from the molding surface 106 into the cavity formed by the base 104. The mold cavity 302 is depicted as a simple polyhedron for illustration purposes, but it is contemplated that the mold cavity may be formed to have any shape. For example, the mold cavity may be formed as a whole or portion of a midsole, outsole, or other article of footwear component. Another exemplary mold cavity will be depicted in FIG. 9, in accordance with aspects hereof.

The mold cavity 302 may be any size or shape. In an exemplary aspect, the mold cavity 302 is sized and oriented to fit within a cavity of the base 104. For example, the base 104 may be backfilled with a substantially non-compressible fill material, such as an aluminum-based powder or the like, that provides structural support to thermoform material 102 during a molding operation. The backfill is maintained in a supporting position relative to the thermoform material 102 by filling a sealed volume formed in the base 104 and the thermoform material 102, as will be depicted in FIG. 4 hereinafter. The backfill can provide compressive support during a subsequent molding operation. The compressive support prevents the mold cavity 302 from deforming from an intended shape during a molding operation, in an exemplary aspect. As will be discussed, the use of backfill is optional in exemplary aspects hereof.

FIG. 4 depicts an illustrated process flow 400 for utilizing an adaptable mold, such as the mold 100 of FIG. 1, in accordance with aspects hereof. The adaptable mold in the process flow 400 is comprised of a thermoform material 403 and a base 401. At a first illustrated step 402 in the method, a positive tool 405 is introduced to a molding surface of the thermoform material 403. In this exemplary aspect, the thermoform material 403 is brought to a transition temperature. As previously discussed, a transition temperature is a temperature at which the thermoform material is able to deform without failure (e.g., crack, tear, rip). In an exemplary aspect, the transition temperature is at a glass transition temperature of one or more polymer segments of the thermoform material 403. For example, if the thermoform material is a SMP having soft and hard segments, the soft segments may be formable above a specific temperature, such as a glass transition temperature of the soft segments. In additional examples the transition temperature is at 15 degrees C less than a glass transition temperature of one or more portions (e.g., segments) of the thermoform material. As the structure of the thermoform material may become formable at a range of temperatures and not at a specific temperature based on the composition, 15 degrees C in an exemplary aspect provides a forming temperature relative to the glass transition temperature. The thermoform material may have a transition temperature between 150 degrees C and 200 degrees C. Additionally, it is contemplated that the thermoform material may have a transition temperature that is a glass transition temperature of the thermoform material in a range of 145 degrees C to 175 degrees C. The transition temperature may also be relative to or at a melting temperature of the thermoform material or portions (e.g., segments) of the thermoform material.

The thermoform material 403 may be brought to the transition temperature by any means. For example, a thermal energy source may provide radiant heat that raises a temperature of the thermoform material to the transition temperature. Other means of elevating the temperature are contemplated (e.g., a doped thermoform material exposed to radio waves, such as microwave energy, infrared heating, and the like). The temperature of the thermoform material may be raised above a transition temperature while being maintained below the permanent temperature when the thermoform material is a SMP. Raising the temperature while staying below the permanent temperature allows for the SMP to return to an intended learned/permanent shape as will be depicted at a step 418 in the process 400.

The positive tooling 405 is a forming tool effective to create a mold cavity in the thermoform material 403 that can subsequently be used for molding an article. The molded article will assume the shape of the positive tooling 405 as a result. Therefore, it is contemplated that the surfaces of the positive tooling 405 to be exposed to the thermoform material 403 are sized and shaped to represent a form that the thermoform material 403 is intended to take and the resulting molded article is to assume. The positive tooling 405 may be formed from any material. For example, it is contemplated that the positive tooling 405 is formed from a rapid manufacturing technique, such as a deposition technique. In this way, it is contemplated that the positive tooling 405 may be formed with minimal processing time. The positive tooling 405 may also be formed from traditional manufacturing techniques as well, such as milling. The positive tooling 405 may be formed from a polymer-based, an organic material, and/or a metallic-based material. The positive tooling 405 may be a one-time tooling that is disposed of after use or it may be a repetitive-use tooling that is stored and recalled each time the adaptable mold is intended to form a molded article modeled from the positive tooling 405.

At a step 404 the positive tooling 405 forms a mold cavity in the thermoform material 403. To aid in the thermoform material 403 conforming to the surfaces of the positive tooling 405, a positive pressure may be introduced into a sealed cavity formed by the base 401 and the thermoform material 403. The positive pressure may be introduced through a positive pressure port 407. The positive pressure may be greater than ambient pressure and result in the thermoform material in a formable state to comply with the surfaces of the positive tooling to assume the size and shape of the positive tooling surface to which the thermoform material 403 contacts. The positive pressure may be generated by any means, such as a compressed air source or other pressure source. It is further contemplated that the pressure source may introduce thermal energy into (or extract thermal energy from) the cavity formed by the base and the thermoform material. This thermal energy manipulation by the pressure source may aid in adjusting a temperature of the thermoform material 403. It is further contemplated that a maintainer may be used to maintain the positive tooling 405 in an intended location while a positive pressure is introduced. The maintainer may be a clamp or other lid-like structure to maintain the positive tooling in a position relative to the thermoform material.

While the positive tooling 405 is maintained in contact with the thermoform material 403, a temperature of the thermoform material 403 is reduced below a glass transition temperature (or other transition temperature) such that the thermoform material is able to maintain a mold cavity shape formed by the positive tooling. As depicted in a step 406, the positive tooling has been removed and the thermoform material maintains a mold cavity 409 that mimics the positive tooling shape. At a step 408 a backfill port 413 is used to introduce fill material 411. The backfill port 413 may be a sealable port (e.g., screw cap) that allows for the filling of the cavity volume in the base to the cavity-side-thermoform-material surface. The fill material may be any material. In an exemplary aspect the fill material is a non-compressible material, such as a powder or a liquid. It is contemplated that the fill material may be metallic-based materials, such as an aluminum-based material, in an exemplary aspect. Alternatively, an oil-based, water-based, or alcohol based fluid may be used as a non-compressible fill. Because the fill, in this example, fills the volume of the cavity, the fill can provide compressive support to the thermoform material in a molding operation such that the mold cavity 409 maintains an intended shape.

At a step 410, a mold material 417 is introduced into the mold cavity 409. For example, an EVA, rubber, or other polymer-based materials (foamed or non-foamed) may be the mold material 417. The mold material 417 is introduced, in an exemplary aspect with the thermoform material staying below the transition temperature such that the thermoform material maintains the intended shape of the positive tooling at the mold cavity. As also depicted in the step 410, a seal 415 is formed in the backfill port 413. While not explicitly depicted, it is also contemplated that the positive pressure port 407 may also be sealed to prevent the fill material 411 from moving from the cavity, in an exemplary aspect.

At a step 412, a cap 419 (also referred to as a core) is positioned over the mold material to form the molded article 421. The cap 419 may aid in the forming of the molded article 421. For example, if the mold material 417 is a foaming material, the cap 419 may enclose the mold cavity 409 to achieve an intended shape and/or density of material of the molded article 421. As depicted in a step 414, once the mold material 417 is cured to form the molded article 421, the molded article 421 may be removed from the mold cavity. At a step 416, the fill material 411 may be removed from the cavity through the backfill port 413. Removal of the fill material 411 may allow for the thermoform material to return to a learned shape, such as a planar shape. Return of the thermoform material 403 to the learned shape may be accomplished by raising the temperature of the thermoform material above a transition temperature such that the thermoform material attempts to return to the learned shape. It is contemplated that positive pressure may be added to the cavity through the positive pressure port 407 to further aid in returning the thermoform material to the learned shape. The positive pressure may act on the thermoform material through the force of the positive pressure against the malleable thermoform material and/or the positive pressure introducing thermal energy into the cavity to further encourage and allow the thermoform material to return to a learned shape. Following the thermoform material returning to the learned shape, the process 400 may be repeated one or more times for different positive tooling to form different molded articles. As such, a common mold, such as the adaptable mold discussed herein, may be adapted to form a plurality of different molded articles in accordance with aspects provided herein.

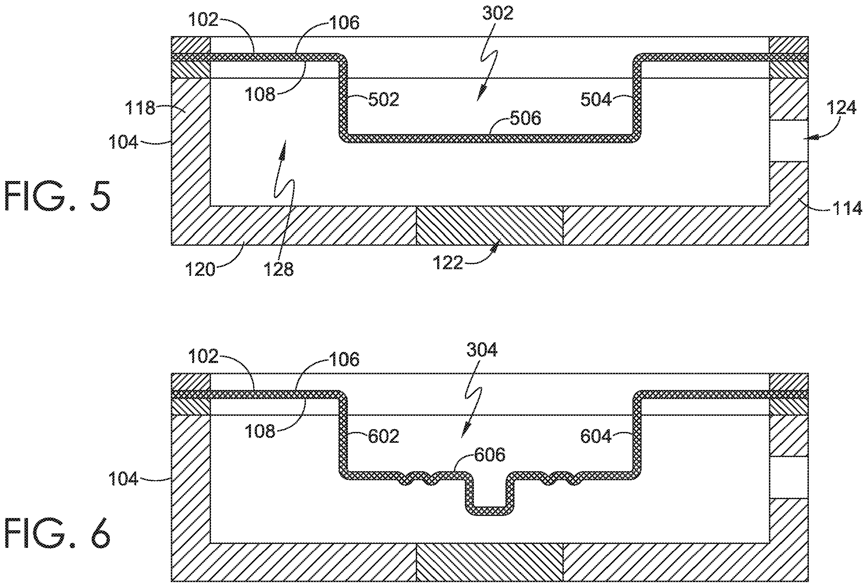

FIG. 5 depicts a cross-sectional view of mold 100 along cutline 5-5 of FIG. 3, in accordance with aspects hereof. Specifically depicted is the mold cavity 302 having mold walls 502, 504, and mold surface 506. As will be illustrated in FIG. 6 and FIG. 9, it is contemplated that the mold walls and mold surface(s) may have any dimension or shape to form a mold article. For example, the mold surface 506 may include one or more ground-contacting features, such as tread or lugs, if the molded article is an article of footwear sole. However, it is contemplated that any of the walls or surfaces of the mold cavity may be formed to include mold features that will be formed into a molded article molded in the mold cavity 302.

FIG. 6 depicts an alternative cross-sectional view of a mold, such as the mold 100 along cutline 5-5 of FIG. 3, in accordance with aspects hereof. In this example, the mold cavity 302 is comprised of walls 602, 604 and a mold surface 606. The mold surface 606 includes dimensional elements as opposed to the planar nature depicted in the mold surface 506 of FIG. 5. As such, it is contemplated that any dimensional configuration may be provided to the thermoform material 102.

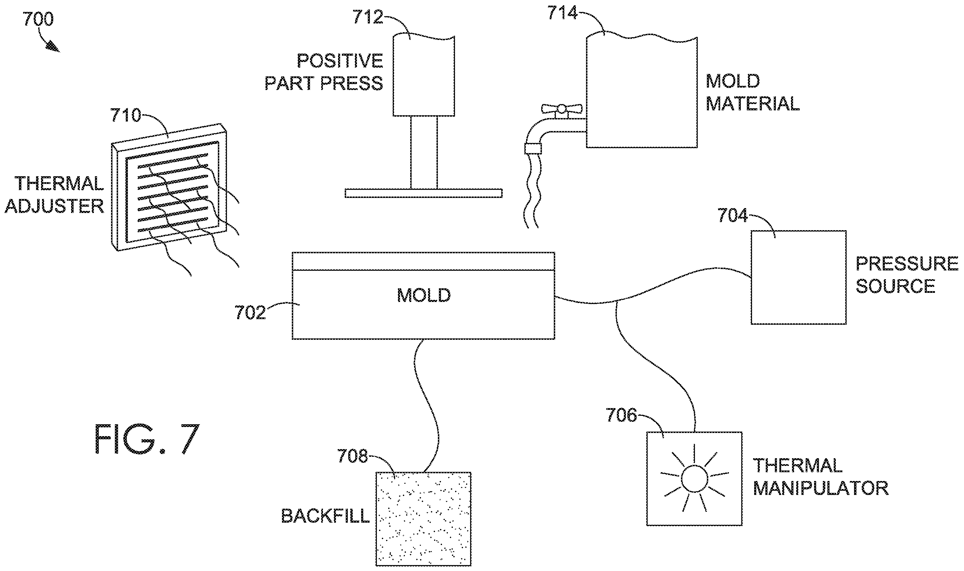

FIG. 7 depicts an exemplary system 700 for forming an adaptable mold 702 and/or for using the adaptable mold 702, in accordance with aspects hereof. The system 700 is depicted as including a plurality of elements; however, it is contemplated that one or more of the elements may be omitted. Additionally, the elements depicted in connection with the system 700 are merely illustrative in nature and are not intended to be limiting. As such, additional elements or elements of different configurations arc contemplated in connection with the system 700.

The mold 702 may be similar to the adaptable mold provided herein, such as the mold 100 of FIG. 1, for example. A pressure source 704 is depicted. The pressure source 704 is any source of pressure, such as a compressor or blower. The pressure source 704 may be fluidly coupled, either permanently or temporarily, with the mold 702. As previously discussed, the pressure source 704 may provide a greater than ambient air pressure to a cavity within the mold allowing the thermoform material to conform to and shape to a positive tooling (a positive part). Additionally, in an exemplary optional aspect, it is contemplated that a thermal manipulator, such as a heating or cooling apparatus, may be fluidly coupled with the mold 702. For example, the thermal manipulator 706 may be effective to heat or cool a fluid (e.g., gas or liquid) supplied from the pressure source 704. For example, it is contemplated that chilled air may be supplied by the thermal manipulator 706 at the pressure source 704 provides pressure. The chilled air may be effective to reduce a temperature of the thermoform material on the mold 702 below a transition temperature. This accelerated reduction in temperature may temporarily set the thermoform material in a shape defined by the positive tooling so that the positive tooling may be removed. As such, a cycle time for forming the mold 702 may be reduced with an accelerated cooling time provided by the thermal manipulator 706. Conversely, it is contemplated that the thermal manipulator may heat the pressure source 704 fluid. This heated fluid may decrease a time to bring a thermoform material to a transition temperature by exposing at least the cavity-facing surface of the thermoform, material to the elevated temperature.

The system 700 may further be comprised of a mold material 714 that is dispensed by a dispenser. The mold material is a material intended to be introduced to a mold cavity of the mold 702. The mold material may be any material, such as a polymer-based material. In an exemplary aspect the mold material 714 is introduced to the mold 702 at a temperature below a melting temperature of the thermoform material.

The system 700 is also comprised of a positive part press 712. The positive part press 712 is effective to compress a positive tooling (also referred to as a positive part herein) into the thermoform material of the mold 702. The compression of the positive tooling allows for a mold cavity to be formed in the thermoform material. The positive press may be hydraulic, pneumatic, electrically actuated, and the like.

The system 700 may also include a thermal adjuster 710. The thermal adjuster 710 is effective to manipulate a temperature experienced by the mold 702 and the thermoform material specifically. For example, the thermal adjuster 710 may provide energy causing an increase in temperature of the thermoform material to a transition temperature or a permanent temperature if the thermoform material is a SMP. For example, the thermal adjuster 710 may be a heater effective to raise a temperature of the thermoform material from an operating temperature (e.g., ambient temperature) to a specified temperature, such as a transition temperature. Further the thermal adjuster 710 may be effective to raise the temperature of the thermoform material to a permanent temperature that is effective, in connection with a SMP, to allow the SMP to return to a learned shape. Additionally, it is contemplated that the thermal adjuster 710 is effective to lower a temperature of the mold 702. For example, the molding process itself may involve molding materials at or near a transition temperature of the thermoform material. In an effort to maintain a molding cavity formed by the thermoform material with the introduction of the mold material 714 near or above a transition temperature, the thermal adjuster 710 may be effective to maintain the thermoform material below the transition temperature, in an exemplary aspect.

The system 700 is also comprised of a backfill 708. The backfill 708 is a material effective to provide compressive support to the mold 702. In an exemplary aspect, the backfill 708 is a non-compressible material, such as a fluid or a liquid. In an exemplary aspect, the backfill 708 is a sand, gravel, and/or powder. It is contemplated that the backfill 708 may be thermally conductive or substantially insulative. The thermal properties of the backfill 708 may be leveraged to aid in molding, such as moderating a curing time of the mold material 714 or moderating a temperature achieved by the thermoform material in response to the mold material 714.

FIG. 8 depicts an alternative cross-sectional view of an adaptive mold 801, in accordance with aspects hereof. The adaptive mold 801 is comprised of the base 104 previously discussed in connection with the adaptive mold 100 of FIG. 1. The adaptive mold 801 is also comprised of a bladder 800. The bladder 800 is a thermoform material and is functionally relevant to the thermoform material 102 of FIG. 1. For example, the bladder 800 may be formed from a SMP having a temporary shape formed by a positive tooling to be used for a mold and also a learned shape to which the bladder attempts to return to at a permanent temperature. The bladder 800 may leverage a pressure source to aid in returning from a temporary shape to a learned shape. Additionally, the bladder 800 may leverage a pressure source to confirm the bladder 800 to one or more surfaces of a positive tooling. The bladder 800 may include an inlet port 806 for fluidly coupling the bladder with a pressure source remote from the base 104, in an exemplary aspect. The bladder 800 has a mold surface 802 and a cavity-facing surface 804, where the cavity-facing surface 804 forms an interior surface of an internal volume of the bladder 800, similar in function to the cavity 128 of FIG. 1. A mold cavity may be formed in the bladder 800 at the mold surface 802 towards the bladder internal volume. The bladder 800 may be substantially confined by the base 104 allowing for a positive tooling to form a mold cavity on the mold surface 802, in an exemplary aspect.

The bladder 800 may be filled with a non-compressible fluid, such as a water-based or an oil-based fluid. The fluid may serve as the previously described backfill material to provide compressive support to a mold cavity formed therein. The non-compressible fluid may be introduced into and vacated from the bladder 800 through the inlet port 806.

FIG. 9 depicts a cross-sectional view of the mold 100 from FIG. 1, with a positive tooling 900, in accordance with aspects hereof. The positive tooling 900 includes a forming surface 902 having a pattern intended to be formed in the thermoform material 102. As the positive tooling 900 is positioned and compressed into the thermoform material 102, the thermoform material 102 complies with and conforms to the positive tooling 900 forming surface 902. The positive tooling 900 may also be comprised of one or more flange portions 904. The flange portions 904 may be effective to stabilize and prevent unintended deformation of the thermoform material 102 as the forming surface 902 is introduced to the thermoform material 102, in an exemplary aspect. The flange portions 904 may also secure the positive tooling 900 in a relative position to the base 104. For example, if a positive pressure is supplied to the cavity 128, the thermoform material may attempt to displace the positive tooling 900 instead of completely complying with the forming surface 902, in an exemplary aspect. As can be appreciated, it is contemplated that the forming surface 902 may include any shape or pattern.

From the foregoing, it will be seen that this invention is one well adapted to attain all the ends and objects hereinabove set forth together with other advantages which are obvious and which are inherent to the structure.

It will be understood that certain features and subcombinations are of utility and may be employed without reference to other features and subcombinations. This is contemplated by and is within the scope of the claims.

## Claims

1. A mold (100, 702, 801) with a thermoform polymer molding surface (106), the mold (100, 702, 801) comprising: a base (104, 401) having one or more sidewalls (112, 114, 116, 118) and a floor (120), the one or more sidewalls (112, 114, 116, 118) extending from the floor (120) and at least in part forming a cavity (128); and a molding surface (106) of a thermoform polymer material extending between the one or more sidewalls (112, 114, 116, 118), the molding surface (106) having a molding surface (106) presented away from the floor (120) and an opposite cavity surface (108) presented toward the floor (120), wherein the molding surface (106) forms around a positive part into the cavity when the molding surface (106) is at at least a transition temperature of the thermoform polymer material,
wherein the base (104, 401) is further comprised of a pressure port (124) extending through the frame (110) into the cavity (128).

2. The mold (100, 702, 801) of claim 1, wherein the thermoform polymer material is a shape memory polymer.

3. The mold (100, 702, 801) of claim 1, wherein the transition temperature is a glass transition temperature of the thermoform polymer in a range of 145 degrees Celsius ("C") to 200 degrees C, preferably in a range of 150 degrees C to 175 degrees C.

4. The mold (100, 702, 801) of claim 1 further comprising a frame (110), the frame (110) connecting the thermoform material at a perimeter (112) of the thermoform material.

5. The mold (100, 702, 801) of claim 4, wherein the frame (110) is coupled with the one or more sidewalls (112, 114, 116, 118) at positions opposite the floor (120) allowing for the thermoform material and frame (110) to extend between the one or more sidewalls (112, 114, 116, 118).

6. The mold (100, 702, 801) of claim 1, wherein the thermoform polymer material is one of a thermoset shape memory polymer or a thermoplastic shape memory polymer.

7. The mold (100, 702, 801) of claim 1, wherein the molding surface (106) forms a portion of a bladder (800) comprised of the thermoform polymer material.

8. The mold (100, 702, 801) of claim 1, wherein the pressure port (124) extends through a sidewall (112, 114, 116, 118) of the one or more sidewalls (112, 114, 116, 118).

9. The mold (100, 702, 801) of claim 8, wherein the base (104, 401) further comprises a backfill port (122, 413) extending through the base (104, 401) and removably sealing the cavity (128) from an exterior of the base (104, 401).

10. A method of molding an article with a thermoform polymer molding surface (106), the method comprising: raising a temperature of the thermoform polymer molding surface (106) to at least a transition temperature, the transition temperature is a temperature that is 15 degrees Celsius ("C") below a glass transition temperature of the thermoform polymer molding surface (106); forming the thermoform polymer molding surface into a first mold depression with a positive shaped tool; reducing the temperature of the thermoform polymer molding surface (106) below the transition temperature; backfilling the thermoform polymer molding surface (106) with a substantially non-compressible material at a cavity side of the thermoform polymer molding surface (106) that is opposite a molding side of the thermoform polymer molding surface (106); removing the positive shaped tool from the first mold depression; applying a molding material into the first mold depression; extracting the molding material from the first mold depression; and forming the thermoform polymer molding surface (106) into a second mold depression that is different from the first mold depression.

11. The method of claim 10 wherein the transition temperature is at least 145 degrees C.

12. The method of claim 10, wherein the forming the thermoform polymer molding surface (106) into the first mold depression further comprises applying a positive pressure to a cavity side of the thermoform polymer molding surface (106) and the first positive part is on a mold side of the thermoform polymer molding surface (106), wherein the positive pressure conforms the thermoform polymer molding surface (106) to the positive part at least in part.

13. The method of claim 10 further comprising, prior to forming the thermoform polymer molding surface (106) into the second mold depression, removing at least a portion of the non-compressible material from the cavity side of the thermoform polymer molding surface (106).

14. The method of claim 10 further comprising reconfiguring the thermoform polymer molding surface (106) to a programmed state prior to forming the thermoform polymer molding surface (106) into the second mold depression, wherein the thermoform polymer molding surface (106) is a shape memory polymer.

15. A method of forming a thermoform material as a mold (100, 702, 801) for sequentially different articles, the method comprising: raising the thermoform material to at least 145 degrees Celsius ("C"), the thermoform material is comprised of a shape memory polymer having a learned shape; creating a first mold depression on a mold side of the thermoform material; reducing a temperature of the thermoform material below 145 degrees C; shaping the thermoform material based on the learned of the shape memory polymer; creating a second mold depression on the mold side of the thermoform material; and reducing a temperature of the thermoform material below 145 degrees C,
wherein creating the first mold depression is comprised of applying pressure to a cavity side of the thermoform material to conform, at least in part, the thermoform material to a positive tooling shape to create the first mold depression, and
wherein the method further comprises backfilling the thermoform material with a substantially non-compressible material at the cavity side of the thermoform polymer molding.

## Patentansprüche

1. Form (100, 702, 801) mit einer Thermoformpolymerformfläche (106), wobei die Form (100, 702, 801) umfasst: eine Basis (104, 401) mit einer oder mehreren Seitenwänden (112, 114, 116, 118) und einem Boden (120), wobei sich die eine oder mehreren Seitenwände (112, 114, 116, 118) von dem Boden (120) erstrecken und zumindest teilweise einen Hohlraum (128) bilden; und eine Formfläche (106) aus einem Thermoformpolymermaterial, die sich zwischen der einen oder den mehreren Seitenwänden (112, 114, 116, 118) erstreckt, wobei die Formfläche (106) eine von dem Boden (120) weg gerichtete Formfläche (106) und eine gegenüberliegende bzw. entgegengesetzte Hohlraumfläche (108) aufweist, die zu dem Boden (120) hin gerichtet ist, wobei sich die Formfläche (106) um einen positiven Teil herum in den Hohlraum bildet, wenn die Formfläche (106) bei zumindest einer Übergangstemperatur des Thermoformpolymermaterials ist,
wobei die Basis (104, 401) ferner aus einer Drucköffnung (124) besteht, die sich durch den Rahmen (110) in den Hohlraum (128) erstreckt.

2. Form (100, 702, 801) nach Anspruch 1, wobei das Thermoformpolymermaterial ein Formgedächtnispolymer ist.

3. Form (100, 702, 801) nach Anspruch 1, wobei die Übergangstemperatur eine Glasübergangstemperatur des Thermoformpolymers in einem Bereich von 145 Grad Celsius ("C") bis 200 Grad C, vorzugsweise in einem Bereich von 150 Grad C bis 175 Grad C ist.

4. Form (100, 702, 801) nach Anspruch 1, ferner umfassend einen Rahmen (110), wobei der Rahmen (110) das Thermoformmaterial an einem Umfang (112) des Thermoformmaterials verbindet.

5. Form (100, 702, 801) nach Anspruch 4, wobei der Rahmen (110) mit der einen oder den mehreren Seitenwänden (112, 114, 116, 118) an Positionen gegenüberliegend bzw. entgegengesetzt zu dem Boden (120) gekoppelt ist, wodurch dem Thermoformmaterial und dem Rahmen (110) ermöglicht wird, sich zwischen der einen oder den mehreren Seitenwänden (112, 114, 116, 118) zu erstrecken.

6. Form (100, 702, 801) nach Anspruch 1, wobei das Thermoformpolymermaterial eines eines duroplastischen Formgedächtnispolymers oder eines thermoplastischen Formgedächtnispolymers ist.

7. Form (100, 702, 801) nach Anspruch 1, wobei die Formfläche (106) einen Abschnitt einer Blase (800) bildet, die aus dem Thermoformpolymermaterial besteht.

8. Form (100, 702, 801) nach Anspruch 1, wobei sich die Drucköffnung (124) durch eine Seitenwand (112, 114, 116, 118) der einen oder mehreren Seitenwände (112, 114, 116, 118) erstreckt.

9. Form (100, 702, 801) nach Anspruch 8, wobei die Basis (104, 401) ferner eine Verfüll- bzw. Hinterfüllungsöffnung (122, 413) umfasst, die sich durch die Basis (104, 401) erstreckt und den Hohlraum (128) entfernbar von einer Außenseite der Basis (104, 401) abdichtet.

10. Verfahren zum Formen eines Artikels mit einer Thermoformpolymerformfläche (106), wobei das Verfahren umfasst: Erhöhen einer Temperatur der Thermoformpolymerformfläche (106) auf zumindest eine Übergangstemperatur, wobei die Übergangstemperatur eine Temperatur ist, die 15 Grad Celsius ("C") unterhalb einer Glasübergangstemperatur der Thermoformpolymerformfläche (106) ist; Formen der Thermoformpolymerformfläche in eine erste bzw. zu einer ersten Formvertiefung mit einem positiv geformten Werkzeug; Verringern der Temperatur der Thermoformpolymerformfläche (106) unter die Übergangstemperatur; Verfüllen bzw. Hinterfüllen der Thermoformpolymerformfläche (106) mit einem im Wesentlichen nicht komprimierbaren Material an einer Hohlraumseite der Thermoformpolymerformfläche (106), die einer Formseite der Thermoformpolymerformfläche (106) gegenüberliegt bzw. entgegengesetzt ist; Entfernen des positiv geformten Werkzeugs aus bzw. von der ersten Formvertiefung; Applizieren eines Formmaterials in die erste Formvertiefung; Extrahieren des Formmaterials aus der ersten Formvertiefung; und Formen der Thermoformpolymerformfläche (106) in eine zweite bzw. zu einer zweiten Formvertiefung, die sich von der ersten Formvertiefung unterscheidet.

11. Verfahren nach Anspruch 10, wobei die Übergangstemperatur zumindest 145 Grad C beträgt.

12. Verfahren nach Anspruch 10, wobei das Formen der Thermoformpolymerformfläche (106) zu der ersten Formvertiefung ferner das Anlegen eines Überdrucks auf eine Hohlraumseite der Thermoformpolymerformfläche (106) umfasst und der erste positive Teil auf einer Formseite der Thermoformpolymerformfläche (106) ist, wobei der Überdruck die Thermoformpolymerformfläche (106) zumindest teilweise an den positiven Teil anpasst.

13. Verfahren nach Anspruch 10, ferner umfassend, vor dem Formen der Thermoformpolymerformfläche (106) zu der zweiten Formvertiefung, Entfernen zumindest eines Abschnitts des nicht komprimierbaren Materials von der Hohlraumseite der Thermoformpolymerformfläche (106).

14. Verfahren nach Anspruch 10, ferner umfassend Rekonfigurieren der Thermoformpolymerformfläche (106) zu einem programmierten Zustand vor dem Formen der Thermoformpolymerformfläche (106) in die zweite Formvertiefung, wobei die Thermoformpolymerformfläche (106) ein Formgedächtnispolymer ist.

15. Verfahren zum Formen eines Thermoformmaterials als eine Form (100, 702, 801) für sequentiell verschiedene Artikel, wobei das Verfahren umfasst: Erhöhen des Thermoformmaterials auf zumindest 145 Grad Celsius ("C"), wobei das Thermoformmaterial aus einem Gedächtnispolymer mit einer erlernten Form besteht; Erzeugen einer ersten Formvertiefung auf einer Formseite des Thermoformmaterials; Verringern einer Temperatur des Thermoformmaterials unter 145 Grad C; Formen des Thermoformmaterials basierend auf dem vom Formgedächtnispolymer Erlernten; Erzeugen einer zweiten Formvertiefung auf der Formseite des Thermoformmaterials; und Verringern einer Temperatur des Thermoformmaterials auf unter 145 Grad C,
wobei das Erzeugen der ersten Formvertiefung darin besteht, Druck an eine Hohlraumseite des Thermoformmaterials anzulegen, um das Thermoform-material zumindest teilweise an eine positive Werkzeugform anzupassen, um die erste Formvertiefung zu erzeugen, und
wobei das Verfahren ferner ein Verfüllen bzw. Hinterfüllen des Thermoformmaterials mit einem im Wesentlichen nicht komprimierbaren Material an der Hohlraumseite des Thermoformpolymerformteils umfasst.

## Revendications

1. Moule (100, 702, 801) présentant une surface de moulage en polymère thermoformé (106), le moule (100, 702, 801) comprenant: une base (104, 401) ayant une ou plusieurs parois latérales (112, 114, 116, 118) et un fond (120), la une ou plusieurs parois latérales (112, 114, 116, 118) s'étendant du fond (120) et formant au moins en partie une cavité (128); et une surface de moulage (106) d'une matière en polymère thermoformé s'étendant entre la une ou plusieurs parois latérales (112, 114, 116, 118), la surface de moulage (106) ayant une surface de moulage (106) dos au fond (120) et une surface de cavité en vis-à-vis (108) tournée vers le fond (120), dans lequel la surface de moulage (106) se forme autour d'une partie positive dans la cavité quand la surface de moulage (106) est à au moins une température de transition de la matière en polymère thermoformé,
dans lequel la base (104, 401) est en outre constituée d'un orifice de pression (124) s'étendant à travers le châssis (110) dans la cavité (128).

2. Moule (100, 702, 801) selon la revendication 1, dans lequel la matière en polymère thermoformé est un polymère à mémoire de forme.

3. Moule (100, 702, 801) selon la revendication 1, dans lequel la température de transition est une température de transition vitreuse du polymère thermoformé dans l'intervalle compris entre 145 degrés Celsius ("C") et 200 degrés C, de préférence dans l'intervalle compris entre 150 degrés C et 175 degrés C.

4. Moule (100, 702, 801) selon la revendication 1 comprenant en outre un châssis (110), le châssis (110) raccordant la matière thermoformée au périmètre (112) de la matière thermoformée.

5. Moule (100, 702, 801) selon la revendication 4, dans lequel le châssis (110) est couplé avec la une ou plusieurs parois latérales (112, 114, 116, 118) à des positions vis-à-vis du fond (120), ce qui permet à la matière thermoformée et au châssis (110) de s'étendre entre la une ou plusieurs parois latérales (112, 114, 116, 118).

6. Moule (100, 702, 801) selon la revendication 1, dans lequel la matière en polymère thermoformé est un polymère à mémoire de forme à durcissement thermique ou un polymère à mémoire de forme thermoplastique.

7. Moule (100, 702, 801) selon la revendication 1, dans lequel la surface de moulage (106) forme une partie d'une vessie (800) constituée de la matière en polymère thermoformé.

8. Moule (100, 702, 801) selon la revendication 1, dans lequel l'orifice de pression (124) s'étend à travers une paroi latérale (112, 114, 116, 118) de la une ou plusieurs parois latérales (112, 114, 116, 118).

9. Moule (100, 702, 801) selon la revendication 8, dans lequel la base (104, 401) comprend en outre un orifice de remplissage (122, 413) s'étendant à travers la base (104, 401) et scellant la cavité (128) de manière démontable de l'extérieur de la base (104, 401).

10. Procédé de moulage d'un article avec une surface de moulage en polymère thermoformé (106), le procédé comprenant: l'augmentation d'une température de la surface de moulage en polymère thermoformé (106) jusqu'à au moins une température de transition, la température de transition est une température qui est de 15 degrés Celsius ("C") en dessous d'une température de transition vitreuse de la surface de moulage en polymère thermoformé (106); le formage de la surface de moulage en polymère thermoformé en un premier creux de moule avec un outil de forme positif; la réduction de la température de la surface de moulage en polymère thermoformé (106) en dessous de la température de transition; le remplissage de la surface de moulage en polymère thermoformé (106) avec une matière substantiellement non compressible côté cavité de la surface de moulage en polymère thermoformé (106) qui se trouve vis-à-vis du côté moulage de la surface de moulage en polymère thermoformé (106); le retrait de l'outil de forme positif du premier creux de moule; l'application d'une matière à mouler dans le premier creux de moule; l'extraction de la matière à mouler du premier creux de moule; et le formage de la surface de moulage en polymère thermoformé (106) en un deuxième creux de moule qui est différent du premier creux de moule.

11. Procédé selon la revendication 10, dans lequel la température de transition est d'au moins 145 degrés C.

12. Procédé selon la revendication 10, dans lequel le formage de la surface de moulage en polymère thermoformé (106) en premier creux de moule comprend en outre l'application d'une pression positive sur un côté cavité de la surface de moulage en polymère thermoformé (106) et la première partie positive est côté moule de la surface de moulage en polymère thermoformé (106), dans lequel la pression positive est conforme, à la surface de moulage en polymère thermoformé (106), à la partie positive au moins en partie.

13. Procédé selon la revendication 10 comprenant en outre, avant le formage de la surface de moulage en polymère thermoformé (106) en deuxième creux de moule, l'élimination d'au moins une partie de la matière non compressible côté cavité de la surface de moulage en polymère thermoformé (106).

14. Procédé selon la revendication 10, comprenant en outre la reconfiguration de la surface de moulage en polymère thermoformé (106) en un état programmé avant formage de la surface de moulage en polymère thermoformé (106) en deuxième creux de moule, dans lequel la surface de moulage en polymère thermoformé (106) est un polymère à mémoire de forme.

15. Procédé de formage d'une matière thermoformée en tant que moule (100, 702, 801) pour des articles successivement différents, le procédé comprenant: l'augmentation de la température de la matière thermoformée à au moins 145 degrés Celsius ("C"), la matière thermoformée est constituée d'un polymère à mémoire de forme présentant une forme acquise; création d'un premier creux de moule côté moule de la matière thermoformée; réduction de la température de la matière thermoformée en dessous de 145 degrés C; la mise en forme de la matière thermoformée sur base du polymère à mémoire de forme acquis; création d'un deuxième creux de moule côté moule de la matière thermoformée; et réduction de la température de la matière thermoformée en dessous de 145 degrés C,
dans lequel la création du premier creux de moule est composée d'une application de pression sur le côté cavité de la matière thermoformée pour conformer, au moins en partie, la matière thermoformée à une forme d'outillage positif pour créer le premier creux de moule, et
dans lequel le procédé comprend en outre le remplissage de la matière thermoformée avec une matière substantiellement non compressible côté cavité du moule en polymère thermoformé.
